# EUROPEAN PATENT APPLICATION

(11) **EP 4 001 019 A1**
(43) Date of publication of application: **25.05.2022**
(21) Application number: 20848560.7
(22) Date of filing: 21.07.2020
(51) Int. Cl.: B60R 16/02

(54) **IN-VEHICLE POWER SUPPLY SYSTEM**

(30) Priority: 30.07.2019 JP 2019139609
(71) Applicant: MAZDA MOTOR CORPORATION, Hiroshima 730-8670 (JP)
(72) Inventor: YAMADA Sadahisa, Aki-gun, Hiroshima 730-8670 (JP); FUJISAKA Kazuichi, Aki-gun, Hiroshima 730-8670 (JP); SHIMIZU Masaaki, Aki-gun, Hiroshima 730-8670 (JP)
(74) Representative: Frick, Robert
(86) International application number: PCT/JP2020/028218
(87) International publication number: WO 2021/020228

(57) **Abstract**

An in-vehicle power supply system includes multiple power supply hubs (13), multiple electronic device (D14, D23, D24), which are connected to the power supply hubs (13) through auxiliary feeder cables, and a control unit (3, 23) which controls on and off of power supply to the electronic devices (D14, D23, D24). The control unit (3, 23) has an approach determination unit (3a), which determines whether a passenger has approached the vehicle, and a power supply start controller (3b), which switches on power supply to at least one of the electronic devices (D14, D23, D24) when the approach determination unit (3a) determines that the passenger has approached the vehicle.

## Description

The present disclosure relates to an in-vehicle power supply system, for example, in a gasoline vehicle, a plug-in hybrid vehicle, or an electric vehicle.

### Background Art

In the related art, an in-vehicle power supply system, which is included in a vehicle, includes a central control unit and ECUs (Electronic Control Units) which receive control signals from the central control unit (for example, see Japanese Unexamined Patent Application Publication No. 2016-201740). The vehicle includes multiple electronic devices including a camera. The exterior state photographed by using the camera is displayed, for example, on the display of a car navigation device. The camera is activated when an ECU switches on power supply to the camera.

### Citation List

### Patent Literature

PTL 1: Japanese Unexamined Patent Application Publication No. 2016-201740

### Summary of Invention

### Technical Problem

In the in-vehicle power supply system of the related art, it takes time for the camera to be activated after start of power supply to the camera. Therefore, there arises a problem that, after the passenger gets in the vehicle, the passenger waits for a long time for the camera to be activated.

There arises another problem that a long time for activation of the camera leads to a long time for which the passenger waits for a video to be displayed on the interior display.

Accordingly, an issue of the present disclosure is to provide an in-vehicle power supply system which may reduce a time for which, after a passenger gets in a vehicle, the passenger waits for an electronic device to be activated. Solution to Problem

An in-vehicle power supply system according to an aspect of the present disclosure includes a plurality of power supply hubs, a plurality of electronic devices, and a control unit. The plurality of electronic devices are connected to the plurality of power supply hubs through auxiliary feeder cables. The control unit is configured to control on and off of power supply to the electronic devices. Each of the plurality of power supply hubs is connected to a different one of the plurality of power supply hubs through a single main feeder cable. The control unit includes an approach determination unit and a power supply start controller. The approach determination unit is configured to determine whether a passenger has approached the vehicle. The power supply start controller is configured to switch on power supply to at least one of the plurality of electronic devices when the approach determination unit determines that the passenger has approached the vehicle.

According to the aspect, when the approach determination unit determines that a passenger has approached the vehicle, the power supply start controller switches on power supply to at least one of the electronic devices. Thus, for example, before the passenger gets in the vehicle, power supply to the at least one of the electronic devices may be started. Therefore, the time, for which, after the passenger gets in the vehicle, the passenger waits for the electronic device to be activated, may be reduced.

An in-vehicle power supply system according to an aspect includes a receiving unit configured to receive a radio wave from a transmitter carried by the passenger. The approach determination unit determines that the passenger has approached the vehicle on the basis of the radio wave from the transmitter carried by the passenger.

According to the aspect, the approach determination unit determines that a passenger has approached the vehicle on the basis of a radio wave from the transmitter carried by the passenger. Thus, when the distance between the vehicle and the passenger reaches a desired distance, the approach determination unit may determine that the passenger has approached the vehicle. Therefore, too early start of power supply to at least one of the electronic devices may be inhibited.

An in-vehicle power supply system according to an aspect includes a lock/unlock state detecting unit configured to detect the lock/unlock state of a door of the vehicle. The approach determination unit determines that the passenger has approached the vehicle on the basis of the result of detection of the lock/unlock state detecting unit.

According to the aspect, the approach determination unit determines that a passenger has approached the vehicle on the basis of the result of detection of the lock/unlock state detecting unit. Thus, power supply to at least one of the electronic devices may be reliably started before the passenger gets in the vehicle.

In an in-vehicle power supply system according to an aspect, the control unit includes a main control device and an auxiliary control device. The auxiliary control device is activated by the main control device. The auxiliary control device controls on and off of power supply to the electronic devices.

According to the aspect, the auxiliary control device controls on and off of power supply to the electronic devices. Thus, a load on control of the main control device may be reduced.

In an in-vehicle power supply system according to an aspect, the plurality of electronic devices include a camera or a car navigation device.

According to the aspect, the plurality of electronic devices include a camera or a car navigation device. Thus, for example, the time, for which, after the passenger gets in the vehicle, the passenger waits for the camera or electronic device to be activated, is reduced. Advantageous Effects of Invention

The in-vehicle power supply system of the present disclosure may reduce the time for which, after a passenger gets in the vehicle, the passenger waits for an electronic device to be activated.

### Brief Description of Drawings

[Fig. 1] Fig. 1 is a vehicle power system diagram of an in-vehicle power supply system according to a first embodiment of the present disclosure.
[Fig. 2] Fig. 2 is a diagram illustrating the signal system of a principal part of the vehicle.
[Fig. 3] Fig. 3 is a control block diagram of a principal part of the vehicle.
[Fig. 4] Fig. 4 is a control block diagram of a principal part of a vehicle, which describes an in-vehicle power supply system according to a second embodiment of the present disclosure.

### Description of Embodiments

An in-vehicle power supply system of the present disclosure will be described in detail below by taking illustrated embodiments. In the drawings, identical reference numbers indicate identical parts or corresponding parts. In the description below, "front", "rear", "right", and "left" mean "the front of a vehicle 1", "the rear of the vehicle 1", "the right of the vehicle 1", and "the left of the vehicle 1". For example, "front-rear direction" indicates "the front-rear direction of the vehicle 1".

### [First Embodiment]

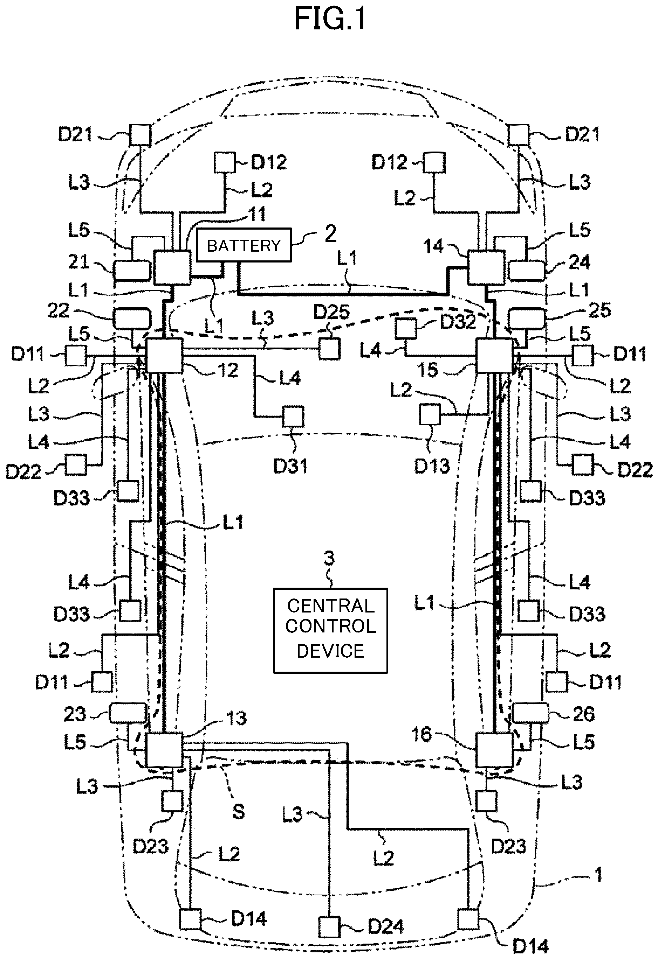

Fig. 1 is a diagram illustrating the power system of the vehicle 1 including an in-vehicle power supply system according to a first embodiment of the present disclosure. The vehicle 1 is a five-door engine vehicle having four side doors and one back door.

The vehicle 1 includes power supply hubs 11 to 16, which are electrically connected to a battery 2 through main feeder cables L1, electronic devices D11 to D14, D21 to D25, and D31 to D33, which are electrically connected to the power supply hubs 11 to 16 through auxiliary feeder cables L2 to L5, ECUs 21 to 26, which control on and off of power supply to the electronic devices D11 to D14, D21 to D25, and D31 to D33, and a central control unit 3, which controls activation of the ECUs 21 to 26. The ECUs 21 to 26 are electrically connected to the power supply hubs 11 to 16 through the auxiliary feeder cables L5. The ECUs 21 to 26 and the central control unit 3 indicate an exemplary control unit. The ECUs 21 to 26 indicate an exemplary auxiliary control device, and the central control unit 3 is an exemplary main control device.

More specifically, the vehicle 1 includes the electronic devices D11 to D14, D21 to D25, and D31 to D33 which operate with power supplied from the battery 2. The electronic devices D11 to D14 are electronic devices (first electronic devices) to which power may be supplied from the battery 2 all the time, and may be called always-on power electronic devices. In contrast, the electronic devices D21 to D25, and D31 to D33 are electronic devices (second electronic devices) to which power may be supplied from the battery 2 through operations of a passenger of the vehicle 1. The electronic device D21 to D25 have power consumption smaller than that of the electronic devices D31 to D33, and may be called accessory electronic devices. The electronic devices D31 to D33 have power consumption larger than that of the electronic devices D21 to D25, and may be called ignition electronic devices.

For example, the electronic devices D11 to D14, which may be called always-on power electronic devices, are the following devices: the electronic devices D11 are keyless devices; the electronic devices D12 are monitoring cameras for burglar monitoring; the electronic device D13 is a burglar alarm device; the electronic devices D14 are brake light devices. The keyless devices receive radio waves from the transmitter in a key carried by a passenger. When a keyless device receives the radio waves, the keyless device outputs, to the central control unit 3, a signal in accordance with the radio waves. The keyless devices are communicatively connected to the central control unit 3 through a communication line (not illustrated). The keyless devices indicate an exemplary receiving unit.

The electronic devices D21 to D25, which may be called accessory electronic devices, are electronic devices which are intended to be used regardless of the on/off state of ignition of the engine of the vehicle 1. For example, the electronic devices D21 are headlights; the electronic devices D22 are electronic mirrors; the electronic devices D23 are audio devices; the electronic device D24 is a rear camera; the electronic device D25 is a car navigation device. The display of the car navigation device displays a video, which is captured by the rear camera, in response to a move of the shift lever to the reverse position. The rear camera is an exemplary camera.

The electronic devices D31 to D33, which may be called ignition electronic devices, are electronic devices which are capable of being used even in the off state of ignition of the engine of the vehicle 1, but which are basically intended to be used in the on state of ignition of the engine. For example, the electronic device D31 is an air conditioner; the electronic device D32 is an electric power steering device; the electronic devices D33 are electric power windows.

The electronic devices D11 to D14, D21 to D25, and D31 to D33 may include, for example, a sensor, an actuator, which are used to operate the devices described above, and an ECU which controls the actuator.

In the first embodiment, the vehicle 1 is divided into six separate zones, and, in each zone, on and off of power supply to the electronic devices D11 to D14, D21 to D25, and D31 to D33 may be controlled.

Any one of the power supply hubs 11 to 16 is provided in the corresponding one of the zones. The power supply hubs 11 to 16 herein have a function of dividing power, which is supplied from the battery 2, among power systems at positions close to the electronic devices D11 to D14, D21 to D25, and D31 to D33, and distributing the power to the electronic devices.

The power supply hub 11 is disposed on the front left side. The power supply hub 12 is disposed near the side door zone on the front left side. The power supply hub 13 is disposed on the rear left side. The power supply hub 14 is disposed on the front right side. The power supply hub 15 is disposed near the side door on the front right side. The power supply hub 16 is disposed on the rear right side. If the number of zones is increased or decreased, the number of power supply hubs 11 to 16 is increased or decreased in accordance with the increase or decrease of the number of zones.

The power supply hubs 11 to 16 are disposed along the power supply paths between the battery 2 and the electronic devices D11 to D14, D21 to D25, and D31 to D33. More specifically, the power supply hub 11 is disposed along the power supply paths between the battery 2 and the electronic devices D12 and D21 on the front left side. The power supply hub 12 is disposed along the power supply paths between the battery 2 and the electronic devices D11, D22, and D33 in or near the side door zone on the left, and between the battery 2 and the electronic device D25 on the center side. The power supply hub 13 is disposed along the power supply paths between the battery 2 and the electronic devices D14 and D23 on the rear left side, between the battery 2 and the electronic device D14 on the rear right side, and between the battery 2 and the electronic device D24 on the rear side. The power supply hub 14 is disposed along the power supply paths between the battery 2 and the electronic devices D12 and D21 on the front right side. The power supply hub 15 is disposed along the power supply paths between the battery 2 and the electronic devices D11, D22, and D33 in or near the side door zone on the front right side. The power supply hub 16 is disposed along the power supply path between the battery 2 and the electronic device D23 on the rear right side.

Each of the power supply hubs 11 to 16 is electrically connected to the battery 2 or its nearby power supply hub among the power supply hubs 11 to 16 through a single main feeder cable L1. More specifically, the power supply hub 11 and the power supply hub 14 are connected to the battery 2 through main feeder cables L1. The power supply hub 12 is electrically connected to the power supply hub 11 through a main feeder cable L1. The power supply hub 13 is connected to a power supply hub through a main feeder cable L1. The power supply hub 15 is electrically connected to the power supply hub 14 through a main feeder cable L1. The power supply hub 16 is electrically connected to the power supply hub 15 through a main feeder cable L1. The power supply hubs 11 to 16 and the battery 2 form two power supply paths in parallel.

The power supply hubs 11 to 16 are supplied with power through the main feeder cables L1. More specifically, the power supply hub 11 and the power supply hub 14 are supplied with power through main feeder cables L1 from the battery 2. The power supply hub 12 is supplied with power from the battery 2 through main feeder cables L1 and the power supply hub 11. The power supply hub 13 is supplied with power from the battery 2 through main feeder cables L1, the power supply hub 11 and the power supply hub 12. The power supply hub 14 is supplied with power from the battery 2 through main feeder cables L1 and the power supply hub 14. The power supply hub 16 is supplied with power from the battery 2 through main feeder cables L1, the power supply hub 14 and the power supply hub 15.

The power supply hubs 11 to 16 are electrically connected to the electronic devices D11 to D14, D21 to D25, and D31 to D33 through the auxiliary feeder cables L2 to L4. More specifically, the power supply hub 11 and the power supply hub 14 are electrically connected to the electronic devices D12 and D21 through auxiliary feeder cables L2 and L3. The power supply hub 12 and The power supply hub 15 are electrically connected to the electronic devices D12, D22, and D33 through the auxiliary feeder cables L2 to L4. The power supply hub 13 is electrically connected to the electronic devices D14, D23, and D24 through auxiliary feeder cables L2 and L3. The power supply hub 16 is electrically connected to the electronic device D23 through an auxiliary feeder cable L3.

The main feeder cables L1 and the auxiliary feeder cable L2 to L4 may be any wires, through which power is supplied, and constitute, for example, wiring harnesses.

The power supply hubs 11 to 16 are electrically connected to the ECUs 21 to 26 through the auxiliary feeder cables L5. More specifically, the power supply hub 11 is electrically connected to the ECU 21 through an auxiliary feeder cable L5; the power supply hub 12, to the ECU 22 through an auxiliary feeder cable L5; the power supply hub 13, to the ECU 23 through an auxiliary feeder cable L5; the power supply hub 14, to the ECU 24 through an auxiliary feeder cable L5; the power supply hub 15, to the ECU 25 through an auxiliary feeder cable L5; the power supply hub 16, to the ECU 26 through an auxiliary feeder cable L5.

The ECUs 21 to 26 have a function of managing and controlling the electronic devices D11 to D14, D21 to D25, and D31 to D33. For example, the ECUs 21 to 26 receive detection results from various sensors (for example, a speed sensor and an interior-temperature sensor) to use the results in processes performed in the ECUs 21 to 26 or transmit information to the central control unit 3.

The central control unit 3 includes, for example, a microcomputer, a memory, and an input/output circuit. The central control unit 3 controls the electronic devices D11 to D14, D21 to D25, and D31 to D33 which are operated in accordance with scenes of use of the vehicle 1.

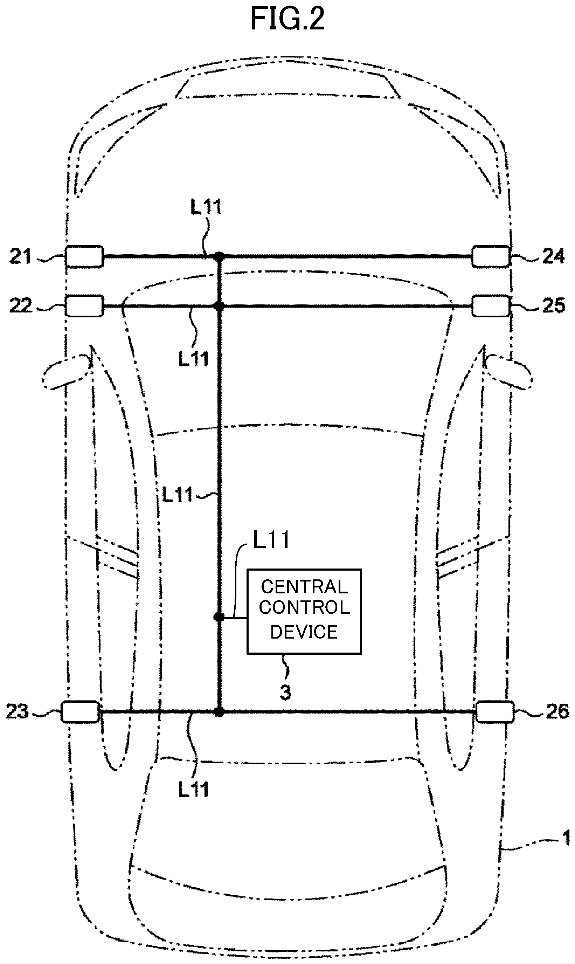

Fig. 2 is a diagram illustrating the signal system of a principal part of the vehicle 1.

The ECUs 21 to 26 receive control signals from the central control unit 3 which controls the entire vehicle 1. More specifically, the ECUs 21 to 26 are communicatively connected to the central control unit 3 through communication lines L11. Thus, control signals, which are output from the central control unit 3, are received by the ECUs 21 to 26 through the communication lines L11. At that time, the ECUs 21 to 26 supply power to the electronic devices D11 to D14, D21 to D25, and D31 to D33, and interrupt the power on the basis of the control signals from the central control unit 3.

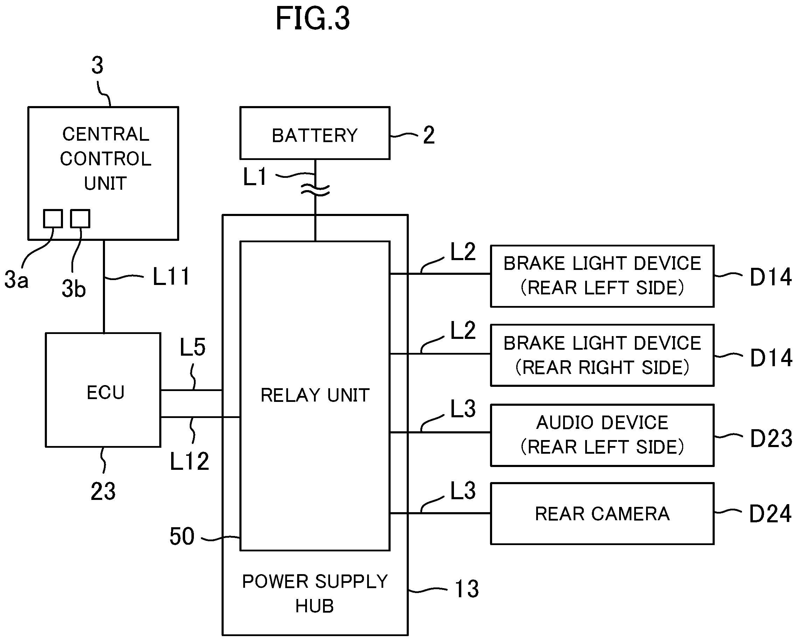

Fig. 3 is a control block diagram of a part of the vehicle 1.

The power supply hub 13 has a relay unit 50 which switches on/off power supply to the electronic devices D11, D14, D23, and D24. The relay unit 50 is electrically connected to the battery 2 through a main feeder cable L1. The relay unit 50 is electrically connected to the electronic devices D14, D23, and D24 through auxiliary feeder cables L2 and L3. The relay unit 50 is communicatively connected to the ECU 23 through a communication line L12. The relay unit 50 includes multiple relays which switch on/off power supply to the electronic devices D11, D14, D23, and D24 individually. The ECU 23 switches on/off the relays in accordance with the control signals from the central control unit 3. That is, power from the battery 2 is temporarily supplied to the power supply hub 13 without being diminished. After that, the power from the battery 2 is distributed to the electronic devices D11, D14, D23, and D24 through the relay unit 50 of the power supply hub 13. The power supply hubs 11, 12, and 14 to 16 have substantially the same configuration as that of the power supply hub 13, which is not illustrated.

The central control unit 3 includes an approach determination unit 3a and a power supply start controller 3b. The approach determination unit 3a determines whether a passenger has approached the vehicle 1. The power supply start controller 3b switches on power supply to the electronic device D24 when the approach determination unit 3a determines that a passenger has approached the vehicle 1. The approach determination unit 3a and the power supply start controller 3b are configured by using software.

The approach determination unit 3a determines that a passenger has approached the vehicle 1, on the basis of radio waves from the transmitter in a key carried by the passenger. More specifically, for example, the distance between the vehicle 1 and a passenger is estimated on the basis of the strength of radio waves received by an electronic device D11. When the estimated distance is equal to or shorter than a predetermined distance, it is determined that the passenger has approached the vehicle 1.

When the approach determination unit 3a determines that a passenger has approached the vehicle 1, the power supply start controller 3b switches on the relay connected to the electronic device D24 (the rear camera D24 in Fig. 3). Thus, power supply to the electronic device D24 is switched on.

In the in-vehicle power supply system having the configuration described above, when the approach determination unit 3a determines that a passenger has approached the vehicle 1, the power supply start controller 3b switches on power supply to the electronic device D24. Thus, before the passenger gets in the vehicle 1, power supply to the electronic device D24 may be started. Therefore, the time, for which, after the passenger gets in the vehicle 1, the passenger waits for the electronic device D24 to be activated, may be reduced.

In addition, if the given distance, which is compared with the distance estimated from the strength of radio waves, is adjusted, the electronic device D24 may be reliably activated before activation of the electronic device D25.

If the given distance is adjusted, power supply to the electronic device D24 may be prevented from starting too early.

The ECUs 21 to 26 control on and off of power supply to the electronic devices D11 to D14, D21 to D25, and D31 to D33. Thus, the load on control of the central control unit 3 may be reduced.

In the first embodiment, a vehicle including the in-vehicle power supply system may be optimized so that the following is achieved. The vehicle may presume that a passenger intends to use a certain electronic device, on the basis of an action of the passenger and the state of the vehicle, and the vehicle may start power supply to the electronic device in accordance with the time, for example, at which the passenger wants to receive information from the electronic device. In addition, the vehicle may reduce or eliminate wasteful consumption of current which is caused by power supply starting early.

For example, in the case of activation of a rear camera, while a vehicle travels at a low speed in a motor pool or near a parking space, when a passenger steps on the foot brake (the state of the vehicle) and when it is recognized, by using the interior camera, that the passenger extends their hand to the shift lever (the state of the passenger), power supply to the back camera may be started.

The in-vehicle power supply system described above does not make the electronic devices wait with the minimum power being supplied. Instead, the in-vehicle power supply system physically interrupts power supply itself by using relays, and starts power supply a given time before the required time. This eliminates a so-called dark current.

The in-vehicle power supply system according to the first embodiment has six zones, into which the vehicle 1 is divided, and is capable of controlling on and off of power supply to the electronic devices D11 to D14, D21 to D25, and D31 to D33 in each zone. Alternatively, the vehicle 1 may be divided into multiple zones, whose number is other than six, and power supply to electronic devices may be switched on/off for each zone.

In the first embodiment, the vehicle 1 is an engine vehicle. Alternatively, for example, the vehicle 1 may be a plug-in hybrid vehicle or an electric vehicle.

In the first embodiment, the electronic devices D11 to D14, D21 to D25, and D31 to D33 are described as being supplied with power from the battery 2. Alternatively, the electronic devices D11 to D14, D21 to D25, and D31 to D33 may be supplied with power directly from a generator.

In the first embodiment, a main feeder cable L1 is not disposed between the power supply hub 13 and the power supply hub 16. Alternatively, such a main feeder cable L1 may be disposed. In other words, the power supply hub 13 may be electrically connected to the power supply hub 16 through a main feeder cable L1.

In the first embodiment, the power supply hubs 11 to 16 are disposed separately from the ECUs 21 to 26. Alternatively, the power supply hubs 11 to 16 may be integrated with the ECUs 21 to 26. In other words, at least one of the power supply hubs 11 to 16 may have substantially the same functions as those of the ECUs 21 to 26.

In the first embodiment, the transmitter is embedded in a key. Alternatively, the transmitter is not necessarily embedded in a key.

In the first embodiment, a time of start of power supply to a rear camera is made earlier. For example, a time of start of power supply to the front cameras disposed on the front of the vehicle 1 may be made earlier. The front cameras indicate an exemplary camera.

In the first embodiment, the approach determination unit 3a and the power supply start controller 3b are configured by using software. Alternatively, one or both of the approach determination unit 3a and the power supply start controller 3b may be configured by using hardware.

In the first embodiment, when the approach determination unit 3a determines that a passenger has approached the vehicle 1, power supply to the electronic device D24 is switched on. Alternatively, power supply to the electronic device D25 may be switched on.

### [Second Embodiment]

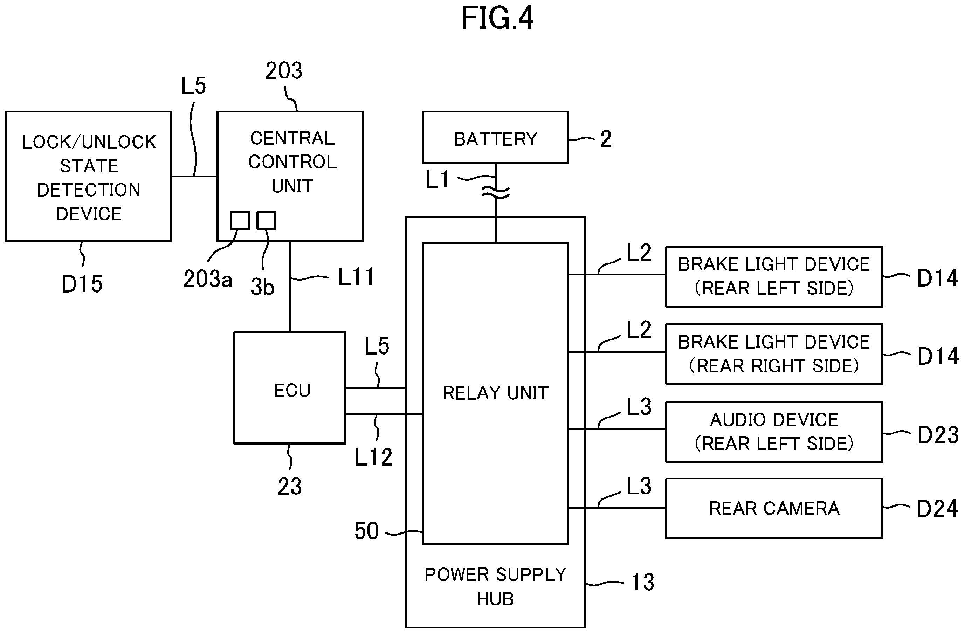

Fig. 4 is a control block diagram of a principal part of a vehicle including an in-vehicle power supply system according to a second embodiment of the present disclosure.

The vehicle includes an electronic device D15 as well as the electronic devices D11 to D14, D21 to D25, and D31 to D33. The electronic device D15 is a lock/unlock state detection device which detects the lock/unlock state of doors of the vehicle, and is included in the in-vehicle power supply system according to the second embodiment. The lock/unlock state detection device is an exemplary lock/unlock state detecting unit. Like the electronic devices D11 to D14, the electronic device D15 is supplied with power from the battery 2, which is not illustrated.

The in-vehicle power supply system also includes a central control unit 203. The central control unit 203 is different from the central control unit 3 according to the first embodiment in that signals indicating the lock/unlock state of the doors of the vehicle are received from the electronic device D15 through a communication line L213, and in that an approach determination unit 203a is included.

The approach determination unit 203a determines whether a passenger has approached the vehicle, on the basis of the result of detection of the electronic device D15. More specifically, when the result indicates that the doors of the vehicle are switched from the lock state to the unlock state, the approach determination unit 203a determines that a passenger has approached the vehicle.

The in-vehicle power supply system having the configuration described above exerts effects similar to those in the first embodiment. In addition, the approach determination unit 203a determines that a passenger has approached the vehicle on the basis of the result of detection of the lock/unlock state detection device D15. Thus, power supply to the electronic device D24 may reliably start before the passenger gets in the vehicle.

The specific embodiments of the present disclosure are described. However, the present disclosure is not limited to the first and second embodiments described above and their modified examples. Various changes may be made and embodied in the scope of the present disclosure. For example, an embodiment obtained by deleting or replacing some of the components according to the first and second embodiments may be regarded as an embodiment of the present disclosure. For example, a combination of a modified example of the first embodiment and the second embodiment may be regarded as an embodiment of the present disclosure. According to the first embodiment, the second embodiment may be changed.

### Reference Signs List

1 vehicle
2 battery
3 central control unit
3a, 203a approach determination unit
3b power supply start controller
11 to 16 power supply hub
21 to 26 ECU
50 relay unit
D11 to D14, D21 to D25, D31 to D33 electronic device
L1 main feeder cable
L2 to L4 auxiliary feeder cable

## Claims

1. An in-vehicle power supply system comprising:
a plurality of power supply hubs;
a plurality of electronic devices connected to the plurality of power supply hubs through auxiliary feeder cables; and
a control unit configured to control on and off of power supply to the electronic devices,
wherein each of the plurality of power supply hubs is connected to a different one of the plurality of power supply hubs through a single main feeder cable, and
wherein the control unit includes
an approach determination unit configured to determine whether a passenger has approached the vehicle, and
a power supply start controller configured to switch on power supply to at least one of the plurality of electronic devices when the approach determination unit determines that the passenger has approached the vehicle.

2. The in-vehicle power supply system according to Claim 1, further comprising:
a receiving unit configured to receive a radio wave from a transmitter carried by the passenger,
wherein the approach determination unit determines that the passenger has approached the vehicle on the basis of the radio wave from the transmitter carried by the passenger.

3. The in-vehicle power supply system according to Claim 1 or 2, further comprising:
a lock/unlock state detecting unit configured to detect a lock/unlock state of a door of the vehicle,
wherein the approach determination unit determines that the passenger has approached the vehicle on the basis of a result of detection of the lock/unlock state detecting unit.

4. The in-vehicle power supply system according to any one of Claims 1 to 3,
wherein the control unit includes a main control device and an auxiliary control device, the auxiliary control device being activated by the main control device, the auxiliary control device controlling on and off of power supply to the electronic devices.

5. The in-vehicle power supply system according to any one of Claims 1 to 4,
wherein the plurality of electronic devices include a camera or a car navigation device.
